# FASCICULE DE BREVET EUROPEEN

(11) **EP 0 543 752 B1**
(45) Date de publication et mention de la délivrance du brevet: **14.02.1996**
(21) Numéro de dépôt: 92420429.0
(22) Date de dépôt: 19.11.1992
(51) Int. Cl.: C04B 38/00, B01J 27/22, B01J 35/10, C04B 35/56

(54) **Procédé de préparation de carbures métalliques à grande surface spécifique à partir de mousses de carbone activées**
Verfahren zur Herstellung von Metallcarbiden mit erhöhter spezifischer Oberfläche aus aktivierten Kohleschaumstoffen
Process for preparing metal carbides of high specific surface from activated carbon foams

(30) Priorité: 21.11.1991 FR 9114607
(43) Date de publication de la demande: 26.05.1993
(73) Titulaire: PECHINEY RECHERCHE (Groupement d'Intérêt Economique régi par l'Ordonnance du 23 Septembre 1967) Immeuble Balzac, F-92400 Courbevoie, La Défense 5 (FR)
(72) Inventeur: Grindatto, Bernard, F-38680 Pont en Royans (FR); Jourdan, Alex, F-38500 Voiron (FR); Prin, Marie, F-38340 Moirans (FR)
(74) Mandataire: Mougeot, Jean-Claude

(56) Documents cités:
- EP-A- 0 315 453
- EP-A- 0 440 569
- FR-A- 2 621 904
- FR-A- 2 645 143
- US-A- 4 481 179
- US-A- 4 536 358
- WPIL, semaine 8546, Derwent Publications Ltd, Londres (GB); AN 85-286190

## Description

### DOMAINE TECHNIQUE DE L'INVENTION.

L'invention concerne le domaine technique des carbures de silicium ou de métaux lourds à grande surface spécifique destinés à servir de catalyseurs ou de supports de catalyseurs pour l'industrie chimique ou pétrochimique ou pour les pots d'échappement.

### PROBLEME POSE.

La surface spécifique d'un catalyseur est due à trois types de porosité: une macroporosité due à des pores de diamètre moyen supérieur à 2 µm, une mésoporosité due à des pores de diamètre moyen 30-50 angströms et une microporosité due à des pores de diamètre moyen 5-15 angströms. Un catalyseur doit présenter une macroporosité suffisante pour donner aux gaz à traiter accès aux micro- et surtout mésopores responsables de l'activité catalytique proprement dite.

La demande de brevet français n° 2 645 143 décrit un procédé de préparation de carbures de métaux lourds à grande surface spécifique qui consiste à faire réagir sous vide un composé du métal lourd, à une température telle que ce composé soit gazeux, sur du carbone ayant une grande surface spécifique, par exemple du charbon actif. Le carbure obtenu conserve la mémoire de la surface spécifique du carbone de départ et présente une surface spécifique nettement supérieure à celle des carbures métalliques de l'art antérieur, bien que plus faible que celle du carbone de départ.

Dans ce procédé de préparation de carbures, les catalyseurs ou supports obtenus sont sous forme de poudre, ou d'agglomérés de type granulés destinés à constituer un lit fixe placé dans un réacteur. Les gaz à traiter circulent, parfois à grande vitesse au travers de ce lit et il en résulte des phénomènes d'attrition avec production de fines qui viennent colmater le lit ou obturer les pièces frittées qui délimitent le lit.

Pour certaines applications catalytiques, en particulier pour la catalyse de l'oxydation des gaz d'échappement, on a besoin de choisir la géométrie du support ou du catalyseur et de le réaliser sous forme de pièces monolithiques, en assurant l'accessibilité du catalyseur aux gaz à traiter par sa macroporosité.

Les inventeurs se sont posé le problème d'obtenir des carbures à haute surface spécifique sous forme monolithique et présentant une importante macroporosité ouverte permettant un accès facile aux gaz réactionnels.

Ainsi, alors que dans le procédé de la demande de brevet français n° 2 645 143, on fabrique d'abord le carbure et qu'on le dispose ensuite en lit, dans le procédé de l'invention, on fabrique d'abord un solide poreux de carbone que l'on transforme ensuite en carbure métallique.

### OBJET DE L'INVENTION.

L'objet de l'invention est un procédé de préparation de carbures métalliques à haute surface spécifique sous forme monolithique présentant une importante macroporosité ouverte permettant un accès facile aux gaz réactionnels caractérisé en ce que l'on part d'une mousse de carbone, qu'on l'active pour augmenter sa surface spécifique et qu'on soumet la mousse activée, sous balayage de gaz inerte ou sous vide, à l'action d'un composé volatil du métal considéré. L'utilisation de certains précurseurs organiques permettant par calcination d'obtenir des mousses de carbone présentant des caractéristiques interessantes fait également partie de l'invention.

Un deuxième objet de l'invention est un catalyseur ou support de catalyseur monolithique constitué d'une mousse de carbure métallique ou de carbure de silicium présentant une importante macroporosité ouverte, une grande surface spécifique due surtout à sa mésoporosité et une faible dimension de cristallites et ne comportant ni métal ni autre composé métallique résiduels.

### DESCRIPTION DE L'ART ANTERIEUR.

La demande de brevet français n° 2 645 143 citée ci-dessus décrit le principe de préparation des carbures métalliques à grande surface spécifique ainsi que des exemples de mise en oeuvre. On mélange le carbone à grande surface spécifique, par exemple du charbon actif avec un composé, volatil à la température de réaction, du métal dont on veut obtenir le carbure. L'ensemble placé dans un creuset est ensuite porté à une température comprise entre 900 et 1400°C sous un vide inférieur à 13 hPa pendant une durée comprise entre 1 et 7 heures mais le plus souvent d'au moins 4 heures. En variante, il est également possible de vaporiser le composé volatil du métal dans une première zone et d'opérer la réduction et la carburation dans une deuxième zone, les températures des deux zones pouvant être différentes.

La demande de brevet français FR 2 621 904 décrit la préparation de carbure de silicium SiC à surface spécifique supérieure à 100 m2/g par:
- génération dans une première zone, de vapeur de SiO par réaction de SiO2 sur Si à une température comprise entre 1100 et 1400°C, sous un vide de 0,1 à 1,5 hPa;
- réaction, dans une deuxième zone, du SiO formé avec du carbone à surface spécifique supérieure à 200 m2/g, à une température comprise entre 1100 et 1400°C.

Le brevet US 2 431 326 (Heyroth) décrit un produit constitué d'un squelette continu et réticulé de SiC cristallisé réparti de façon uniforme et dont les interstices sont remplis de silicium ou d'un composé riche en silicium.

Le squelette peut être fait par calcination de bois, de mélasses, de caséine, de dextrine, de farines ou d'autres substances carbonisables. De préférence, on utilise la réaction de ClH ou de SO4H2 sur du furfural, de l'alcool furfurylique ou leurs mélanges: très rapidement le carbone précipite et croît sous forme dendritique pour former une éponge remplissant tout le récipient.

Le squelette ainsi obtenu est mis en contact avec du silicium, par exemple en le faisant flotter sur du Si fondu très au-dessus de son point de fusion ou en le soumettant à des vapeurs de silicium.

Le brevet FR 1 484 116 (US Atomic Energy Commission ) décrit un procédé de préparation de mousses de carbone et de carbures (en particulier de Si) par une technique dérivée de la préparation de mousses de polyuréthannes.

La réaction d'un isocyanate sur un alcool ou un phénol conduit à un uréthanne et avec des diisocyanates et des dialcools on obtient des polyuréthannes linéaires de formule:

( -OC-NH-R-NH-CO-O-R'-O-)

Par ailleurs, les isocyanates réagissent avec l'eau en donnant du CO2 et une uréine.

La polymérisation en présence d'eau permet donc de former des mousses de polyuréthannes qui, par carbonisation donnent des mousses de carbone. Mais le rendement carbone est faible et les mousses obtenues ne sont pas solides.

L'invention de ce brevet consiste donc:
- d'une part à mélanger un liant dont le rendement en C est élevé: de l'alcool furfurylique partiellement polymérisé,
- d'autre part à mélanger des poudres de métaux ou d'oxydes métalliques pour obtenir des mousses métalliques ou de carbures métalliques ( W, Ta, Nb, Al, B, Si ).

Dans le procédé décrit, l'obtention du carbure se fait en une seule opération, au moment de la calcination du mélange des résines avec l'oxyde métallique ou le métal, ce qui ne permet pas de maîtriser la surface spécifique du carbure obtenu. Dans le procédé de la présente demande de brevet, au contraire, l'obtention du carbure se fait en deux temps séparés par l'activation de la mousse qui permet d'atteindre une surface spécifique du carbure beaucoup plus élevée (20 à 100 m/g), une dimension des cristallites plus faible (40 à 400 angströms = 40 à 400.10⁻¹⁰ m ) et une mousse de carbure ne contenant que peu ou pas de métal résiduel (<0,1 % en poids).

Le brevet GB 2 137 974 (UK Atomic Energy Authority) décrit la fabrication d'une matrice de silicium renforcée par un réseau de carbure de silicium par traitement d'une mousse de carbone par mise au contact de silicium fondu.

### DESCRIPTION DE L'INVENTION.

Le procédé de l'invention consiste en la combinaison des étapes successives suivantes:
- de façon facultative, préparer de la mousse de carbone par calcination d'une mousse d'un polymère organique;
- fabriquer, à partir de la mousse de carbone ainsi préparée ou d'une mousse de carbone du commerce une pièce ayant les dimensions et la forme du support de catalyseur ou du catalyseur que l'on veut obtenir;
- de préférence, dégazer la pièce en mousse de carbone sous vide ou sous balayage d'un gaz inerte tel l'argon;
- activer la surface de cette pièce en l'exposant à une oxydation ménagée par le dioxyde de carbone CO2;
- exposer la pièce ainsi activée à l'action d'un composé volatil du métal dont on veut préparer le carbure à une température (1000 à 1400°C) et pendant une durée (2 à 6 heures) telles que le composé soit réduit en métal, et que le métal soit carburé. Cette étape est conduite soit sous vide, soit sous balayage de gaz inerte à la pression atmosphérique.

### Produits de départ: Mousses de carbone

Les mousses de carbone se présentent sous la forme d'un réseau tridimensionnel de sortes de cages interconnectées dont les arêtes ont des épaisseurs de l'ordre de quelques micromètres, la longueur de ces arêtes pouvant varier de 50 à 500 micromètres. Leur surface BET est très faible: elle est le plus souvent inférieure à 1 m/g. Leur masse volumique peut varier dans de grandes proportions: de 0,03 à 0,1 g/ cm³, selon les dimensions relatives des épaisseurs et des longueurs des arêtes. Selon la nature de la réaction catalytique et selon les caractéristiques mécaniques ou thermiques que l'on attend du catalyseur ou de son support, on sera amené à choisir des mousses de masse volumique plus ou moins importante. Elles sont obtenues par calcination de mousses de résines organiques, par exemple polyuréthannes.

Il est possible de se les procurer dans le commerce. Cependant, la demanderesse a trouvé qu'il était avantageux de les préparer à partir de certains précurseurs organiques, des mousses de polymères, en vue d'obtenir une texture poreuse favorable à leur utilisation comme support de catalyseurs ou catalyseurs.

Deux précurseurs se révèlent particulièrement bien adaptés à l'utilisation envisagée: le polyacrylonitrile ou PAN et les mousses de polyuréthannes.

Le PAN utilisé se présente sous la forme de panneaux rigides de masse volumique comprise entre 0,03 et 0,3 g/cm3, du type commercialisé par exemple par la Société SAITEC. Sa texture poreuse est essentiellement fermée, mais la demanderesse a découvert qu'il était possible de fabriquer, par pyrolyse, une mousse de carbone extrêmement riche en micropores et mésopores ouverts. Afin de développer une macroporosité suffisante pour permettre l'accès des gaz à ces méso- et micropores, il suffit de percer des trous fins et rapprochés dans la pièce ayant la géométrie du catalyseur souhaité découpée dans le panneau. On procède alors à la pyrolyse de la pièce, à une température de 700-900°C, pendant 1 à 2 heures sous atmosphère neutre, azote ou argon, par exemple. La surface spécifique totale de la mousse de carbone obtenue est alors supérieure à 300 m2/g, celle due aux mésopores étant de 10 à 100 m2/g. Il n'est pas nécessaire, dans ces conditions, de procéder à une activation de la mousse.

Les mousses de polyuréthannes ont de multiples applications dans la vie courante: emballage, ameublement, etc...Il est donc très facile de se les procurer à bas prix, en récupérant des mousses usagées, par exemple.

La fabrication de mousses de carbone à partir de ces mousses comporte les étapes suivantes:
- découpage d'une pièce ayant la forme du support de catalyseur souhaitée;
- lavage de la mousse par une solution chaude de soude pendant quelques minutes;
- rinçage à l'eau courante et séchage;
- imprégnation de la mousse avec une résine, par exemple furfurylique et essorage de la mousse imprégnée de façon à ce qu'il reste de 0,03 à 0,1 g de résine /cm3 de mousse;
- pyrolyse de la mousse imprégnée jusque 1200°C.

Ce mode opératoire permet d'élaborer des mousses de carbone ayant une bonne résistance à l'effritement et une structure homogène.

### Activation des mousses

Les mousses de carbone, du commerce ou fabriquées, ne présentent pas, sauf celles préparées à partir de PAN, une méso- et microporosité suffisantes pour être utilisées comme catalyseurs. Il convient donc de les activer.

Pour activer la mousse, on la chauffe à une température comprise entre 700°C et 1000°C, sous balayage de gaz carbonique CO2 à la pression atmosphérique, pendant une durée de 1 à 24 heures.

Cette opération a pour effet de développer par oxydation ménagée de la mousse une méso- et microporosité constituées de pores de diamètres compris entre 20 et 200 angströms. Sa surface spécifique passe ainsi de moins de 1 m/g à plusieurs dizaines voire plusieurs centaines de m/g. Elle peut se faire en discontinu par charges fixes ou, de préférence dans un four à passage dans lequel les pièces en mousse sont soit placés sur une bande transporteuse soit placés dans des récipients qui traversent le four.

### Préparation du carbure métallique

Enfin, la dernière étape consiste à exposer la pièce en mousse activée à l'action d'un composé volatil du métal dont on veut préparer le carbure à une température et pendant une durée telles que le composé soit réduit en métal, et que le métal soit carburé. Cette étape est réalisée soit sous vide, soit sous balayage de gaz inerte à la pression atmosphérique. Les métaux dont on veut obtenir le carbure par le procédé de l'invention sont en particulier les métaux de transition, (groupes 3b, 4b, 5b, 6b, 7b, 8 des séries 4, 5, 6 de la classification des éléments), les métaux des terres rares et les actinides, mais également le silicium.

Ils doivent avoir, en outre, au moins un composé volatil dans les conditions de température de la réaction. Parmi ces composés, on choisit de préférence les oxydes ou les iodures, mais d'autres composés peuvent aussi convenir tels les chlorures, fluorures ou des composés organométalliques sublimables. Parmi les métaux présentant ces caractéristiques et dont les carbures ont un interêt catalytique, on peut citer Mo, W, Re, V, Nb, Ta, Ti, Cr, Ni.

Pour exposer la mousse activée à l'action du composé métallique volatil, plusieurs méthodes sont possibles:
- on peut tout d'abord, comme pour l'opération précédente d'activation, opérer en discontinu en immergeant ou en posant simplement la pièce en mousse activée dans ou sur un lit de poudre du composé volatil. L'ensemble est alors placé dans une enceinte portée à la température voulue, comprise entre 1000 et 1400°C. L'application du vide ou un balayage par un gaz inerte favorise l'élimination du monoxyde de carbone CO qui se forme lorsque le composé volatil choisi est un oxyde.
- cette étape pouvant être réalisée sous balayage de gaz inerte à pression atmosphérique, on peut aussi, comme dans l'opération d'activation, travailler en continu, dans un four à passage. Les pièces de mousse activée sont toujours immergées ou posées simplement dans ou sur un lit de poudre du composé volatil. L'ensemble est placé dans des récipients successifs qui traversent le four chauffé à la température voulue et balayé par un gaz inerte.

Le composé métallique peut être sous forme de poudre plus ou moins fine, ou sous forme agglomérée, granulés ou boulettes par exemple.

Dans le cas particulier du silicium, il est avantageux d'utiliser comme composé volatil le sous-oxyde de silicium SiO. Ce composé volatil s'obtient par réduction de la silice SiO2 soit par le carbone, soit par le silicium, suivant l'une ou l'autre des réactions:

SiO2 + C = SiO + CO

SiO2 + Si = 2SiO

Mais ce sous-oxyde SiO est instable à basse température où il subit une dismutation en Si et SiO2 selon la réaction précédente inversée. Aussi, lorsque l'on veut préparer du carbure de silicium selon la présente invention, faut-il fabriquer le SiO dans le four de carburation lui-même. Cela se fait de façon très simple: on procédera comme dans le cas général décrit ci-dessus, mais on remplacera le lit de composé volatil par un lit de silice mélangée à du silicium. La réaction de transformation en SiC est rapide et complète.

La demanderesse a découvert que, dans le cas de carburation sous balayage de gaz inerte, la teneur en CO à la sortie du réacteur constituait un moyen de piloter son fonctionnement pour assurer un rendement optimal et constant et une bonne qualité des produits.

Les réactions de réduction et de carburation produisent du CO qui est entraîné par le gaz inerte, ce qui favorise l'évolution de la réaction vers la formation du carbure. Les inventeurs ont découvert le rôle important de la pression partielle de CO dans le gaz inerte. Si cette pression devient trop élevée, elle a deux effets nocifs:
- elle peut localement, en fonction de la température donner lieu à une rétrogradation de la réaction de carburation, le CO réagissant sur le carbure formé pour redonner de l'oxyde et du carbone, ce qui diminue d'autant le rendement du réacteur;
- elle peut donner lieu à l'oxydation de l'oxyde volatil pour former un oxyde moins volatil en générant des fines de carbone. C'est le cas, en particulier, de l'oxyde de silicium SiO qui réagit sur le CO pour redonner de la silice et du carbone. Ce dépôt de carbone sur la source de SiO (mélange de Si et de SiO2) pollue ce mélange et donne naissance à du carbure qui n'a évidemment pas les caractéristiques, notamment de surface spécifique de celui obtenu par "filiation" à partir de carbone solide introduit comme matière première. La teneur en CO à la sortie du réacteur constitue donc un moyen de piloter son fonctionnement pour assurer un rendement optimal et constant et une bonne qualité des produits, en particulier un très faible taux d'oxyde n'ayant pas réagi.

Cette découverte a conduit les inventeurs à introduire dans leur mode opératoire deux moyens supplémentaires: le dégazage préalable de la mousse de carbone et le pilotage de la réaction par la pression partielle de CO.

### 1°) Dégazage préalable de la mousse de carbone.

La demanderesse a montré au cours de ses recherches que la totalité de l'oxyde de carbone présent dans le gaz de balayage ne provient pas uniquement des réactions de réduction et de carburation, mais également de la mousse de carbone elle-même. Cette mousse, élaborée à une température inférieure à celles des réactions mises en jeu dans le présent procédé, contient en surface des espèces chimiques organiques comprenant par conséquent des atomes d'hydrogène et d'oxygène. Ces produits organiques, lorsqu'ils sont portés à la température de carburation se décomposent en donnant naissance à des dégagements de CO et de OH2, néfastes aux réactions de carburation.

L'un des moyens de l'invention consiste donc à procéder à un dégazage préalable de la mousse de carbone avant de la mettre en contact avec l'oxyde du métal dont on veut obtenir le carbure. Ce dégazage se fait sous vide primaire ou sous balayage d'un gaz inerte tel l'argon à une température et pendant une durée telles que, la mousse de carbone placée ensuite à une température et dans un débit de gaz inerte identiques à celle de la réaction de carburation, la pression partielle de CO n'excède pas, dans le cas de la carburation du silicium 2 hPa. Cette pression partielle correspond en effet sensiblement à la pression au-delà de laquelle, la réaction SiO + CO = SiO2 + C se produit dans le sens de la formation de SiO2.

Pratiquement, le dégazage recommandé se fait à des températures comprises entre 1000 et 1200°C pendant des durées de 0,5 à 2 heures.

### 2°) Pilotage de la réaction par la pression partielle de CO.

Pour permettre ce pilotage, le procédé comporte donc une boucle de régulation comprenant la mesure en continu ou à intervalles réguliers de la teneur en CO du gaz inerte à la sortie du réacteur, la comparaison avec un intervalle de consigne et une modification des paramètres opératoires pour ramener la teneur en CO à l'intérieur de cet intervalle. On agit de préférence sur le débit de gaz inerte que l'on augmentera si la teneur en CO augmente. A cet effet, une addition de gaz inerte est déclenchée si la teneur en CO dépasse un certain seuil fixé, par exemple à 2 hPa. Au contraire, lorsque la pression de CO devient inférieure à un autre seuil, par exemple 0,05 hPa, ce débit additionnel de gaz inerte est supprimé.

Il est aussi possible de faire varier température de réaction que l'on diminue ou augmente suivant que la teneur en CO augmente ou diminue, mais cela est plus difficilement applicable car les variations de températures présentent plus d'inertie que les variations de débit.

Le procédé, incluant le pilotage du réacteur par la teneur en CO, est alors caractérisé par les étapes suivantes:
- introduire dans un réacteur un mélange réactif constitué d'une part de mousse de carbone dont la surface spécifique est au moins égale à 200 m/g, et préalablement dégazé, d'autre part un composé, volatil dans les conditions de la réaction, du métal dont on fabrique le carbure, dans des proportions voisines de la stoechiométrie;
- balayer le réacteur par un courant de gaz inerte introduit du côté de l'entrée du mélange réactif et extrait du côté de la sortie du carbure obtenu;
- porter le mélange réactif à une température comprise entre 900 et 1400°C pendant un temps suffisant pour volatiliser le composé métallique, le réduire par le carbone et finalement carburer le produit réduit;
- refroidir le carbure obtenu, toujours en présence de gaz inerte, est refroidi jusqu'à une température telle qu'il ne s'oxyde plus au contact de l'air;
- extraire le carbure du réacteur.
et par le fait que l'on mesure en continu ou à intervalles réguliers la teneur en CO du gaz inerte à la sortie du réacteur, que l'on compare cette valeur à un intervalle de consigne et que l'on modifie les paramètres opératoires pour ramener la teneur en CO à l'intérieur de cet intervalle en agissant sur le débit de gaz inerte que l'on augmente si la teneur en CO augmente et que l'on diminue si la teneur en CO diminue ou sur la température de réaction.

### Produit obtenu

Le produit selon l'invention, c'est-à-dire le catalyseur ou support de catalyseur obtenu présente des caractéristiques qui traduisent sa filiation à partir de la mousse de carbone activée.

Sa macroporosité est ainsi constituée d'un réseau tridimensionnel de sortes de cages interconnectées dont les arêtes ont des épaisseurs de quelques micromètres, la longueur de ces arêtes pouvant varier de 50 à 500 micromètres.

La mésoporosité développée par le traitement d'activation de la mousse de carbone subsiste, mais le diamètre moyen des mésopores a augmenté d'un facteur approximatif de 3.

La microporosité développée par le traitement d'activation de la mousse de carbone a disparu presque complètement. Il en résulte une surface BET plus faible que celle de la mousse activée mais plus élevée que celle de la mousse de carbone de départ: elle est comprise entre 20 et 100 m/g.

La masse volumique de la mousse de carbure est du même ordre que celle de la mousse de carbone: de 0,03 à 0,1 g/ cm³, selon les dimensions relatives des épaisseurs et des longueurs des arêtes. Le carbure obtenu est constitué de cristaux élémentaires ou cristallites de faibles dimensions, comprises entre 40 et 400 angströms. Il ne contient que peu ou pas de métal résiduel, moins de 0,1 % en poids.

### EXEMPLES.

### Exemple 1: Fabrication de mousse de carbure à partir de polyacrylonitrile.

On a découpé dans un panneau rigide de PAN une pièce ayant la forme dun cylindre de diamètre 25 mm et de longueur 75 mm. Afin de développer une macroporosité suffisante pour permettre l'accès des gaz aux méso- et micropores qui vont être développés par calcination, on a percé des trous radiaux de diamètre 1 mm et d'entraxe 3 mm sur toute la surface du cylindre. On a procédé ensuite à la pyrolyse de la pièce, à une température de 800°C, pendant 2 heures sous atmosphère d'azote. La surface spécifique de la mousse de carbone obtenue due aux micropores est alors de 320 m2/g et celle due aux mésopores de 40 m2/g. Il n'est pas nécessaire, dans ces conditions, de procéder à une activation de la mousse.

La mousse de carbone est alors placée dans un réacteur sur un lit constitué d'un mélange intime de poudre de silicium et de silice. Le réacteur est mis sous balayage d'argon avec un débit de 50 litres/heure, puis chauffé à une température de 1400°C. Cette température est ensuite maintenue pendant 5 heures. Après quoi, toujours sous balayage d'argon, le réacteur est refroidi jusqu'à la température ambiante.

Le produit obtenu est une mousse de carbure de silicium qui se présente sous la forme d'une texture poreuse dont la macroporosité est constituée par les trous percés dans le précurseur, dont la microporosité a pratiquement disparu et dont la mésoporosité représente une surface spécifique de 35 m2/g. Les cristallites de carbure de silicium ont de faibles dimensions, comprises entre 40 et 400 angströms. Le produit ne contient que peu ou pas de métal résiduel, moins de 0,1 % en poids.

La perméabilité de ce carbure a été comparée à celle d'un support de catalyseur classique, en cordiérite, de même forme et de même dimension. Il s'agit, en effet, d'une caractéristique d'usage très importante pour les catalyseurs de pot d'échappement qui ne doivent pas provoquer de perte de charge trop importante dans l'écoulement à débit élevé des gaz d'échappement.

La perte de charge par unité de longueur P/l est donnée par la formule:

P/1 = µ*d/k₁*S + m*d/k₂*S

où
P est la perte de charge
l la longueur de l'échantillon
S la section de l'échantillon
µ la viscosité du fluide
m la masse volumique du fluide
d le débit de fluide
k₁ et k₂ deux coefficients caractéristiques de la perméabilité de l'échantillon.

Il faut noter que, toutes choses égales par ailleurs, la perte de charge P est d'autant plus faible, c'est-à-dire que la perméabilité est d'autant plus élevée que k₁ et k₂ sont plus grands.

Le tableau ci après donne les valeurs des coefficients k₁ et k₂ pour la mousse classique de cordiérite et pour la mousse en SiC.

| | k₁ (m) | k₂ (m) |
|---|---|---|
| Mousse de cordiérite | 9*10⁻⁹ | 1,4*10⁻⁴ |
| Mousse de SiC | 2,2*10⁻⁸ | 1,3*10⁻³ |

Il ressort de ce tableau que le coefficient k₁ est 2,4 fois plus élevé et le coefficient k₂ 9,3 fois plus élevé pour le SiC que pour la cordiérite et que, par conséquent, le carbure de silicium est sensiblement plus perméable que la cordiérite.

### Exemple 2: Fabrication de mousse de carbone à partir de polyuréthanne.

On a découpé dans un panneau de mousse de poluréthanne une pièce ayant approximativement la forme et les dimensions d'un catalyseur de pot d'échappement. Cette pièce a été lavée dans une solution aqueuse de soude à 4 % à 65°C pendant 8 minutes, puis rincée abondamment à l'eau courante, enfin séchée à l'étuve à 150°C pendant 30 minutes ou au four à micro-ondes pendant 15 minutes. La pièce sèche a été alors imprégnée avec une résine furfurylique additionnée de 2 % d'hexaméthylènetétramine et essorée de façon à ce qu'il reste 0,065 g de résine /cm3 de mousse. La mousse imprégnée a été ensuite pyrolysée jusque 1200°C dans les conditions de montée en température suivantes:
a) 10°C/min jusque 250°C
b) 1°C/min jusque 800°C
c) 3°C/min jusque 1200°C
d) palier de 2 heures à 1200°C.

La mousse de carbone ainsi obtenue possède une macroporosité suffisante pour l'accès des gaz, mais sa mésoporosité et sa microporosité sont insuffisantes. Il est donc nécessaire de procéder à son activation, dans les conditions de l'exemple 3 suivant avant de procéder à la carburation dans les conditions de l'exemple 1.

### Exemple 3: Activation de la mousse.

On est parti d'une mousse de carbone du commerce de très faible masse volumique: 0,03 g/cm³ dont la surface BET est également très faible: moins de 1 m/g.

La mousse est placée dans un réacteur porté à une température de 900°C dans lequel on fait circuler du gaz carbonique débarrassé de traces d'oxygène, à raison de 200 litres / heure, mesurées dans les conditions normales de température et de pression. La réaction d'activation dure 2 heures, après quoi la mousse est refroidie jusqu'à l'ambiante sous circulation de gaz inerte. La mousse activée obtenue présente une surface spécifique BET considérablement augmentée, de 680 m/g.

### Exemple 4: Fabrication de mousse de carbure de silicium SiC.

Un échantillon de la mousse activée obtenue selon les conditions de l'exemple 3 est placé dans un réacteur sur un lit constitué d'un mélange intime de poudre de silicium et de silice. Le réacteur est mis sous balayage d'argon avec un débit de 50 litres/heure, puis chauffé à une température de 1400°C. Cette température est ensuite maintenue pendant 5 heures. Après quoi, toujours sous balayage d'argon, le réacteur est refroidi jusqu'à la température ambiante.

La réaction est pilotée par la pression partielle de CO dans le gaz de balayage à la sortie du réacteur: quand cette pression partielle dépasse 2 hPa, on augmente le débit d'argon; quand cette pression descend en-dessous de 0,05 hPa, ce débit est ramené à sa valeur initiale.

La mousse de carbure de silicium est ensuite traitée par de l'air à une température comprise entre 600 et 800°C pour éliminer le reste de la mousse activée qui n'aurait pas réagi.

On obtient une mousse de carbure de silicium ayant les caractéristiques suivantes:
- composition de la mousse: 100 % de SiC beta; 0 % de carbone résiduel; 0 % de silicium.
- diamètre des cristallites: 52 angströms.
- surface BET: avant traitement d'oxydation: 19 m/g
   après traitement d'oxydation: 22 m/g

### Exemple 5: Fabrication de mousse de carbure de molybdène Mo₂C.

Un échantillon de la mousse obtenue selon les conditions de l'exemple 1 est placé dans un réacteur sur un lit constitué d'oxyde de molybdène MoO₃. Le réacteur est mis sous balayage d'argon avec un débit de 50 litres/heure, puis chauffé à une température de 1300°C. Cette température est ensuite maintenue pendant 5 heures. Après quoi, toujours sous balayage d'argon, le réacteur est refroidi jusqu'à la température ambiante.

On obtient une mousse de carbure de molybdène Mo₂C ayant les caractéristiques suivantes:
- composition de la mousse: 83 % de Mo₂C 17 % de carbone résiduel; 0 % de molybdène métal.
- diamètre des cristallites: 270 angströms.
- surface BET: 150 m/g

### Exemple 6: Comparaison avec le carbure de silicium préparé à partir de charbon actif.

La mousse de carbure de silicium obtenue selon les conditions de l'exemple 4 a été comparée avec des granulés de SiC de dimensions comprises entre 1,25 et 2,5 mm préparés à partir de charbon actif d'une part selon les conditions de la demande française 2 621 904, c'est-à-dire sous un vide de 10⁻ mm de mercure (1,333 Pa), d'autre part selon des conditions voisines dans lesquelles le vide a été remplacé par un balayage d'argon.

Les conditions de synthèse et les caractéristiques obtenues figurent dans le tableau ci-après:

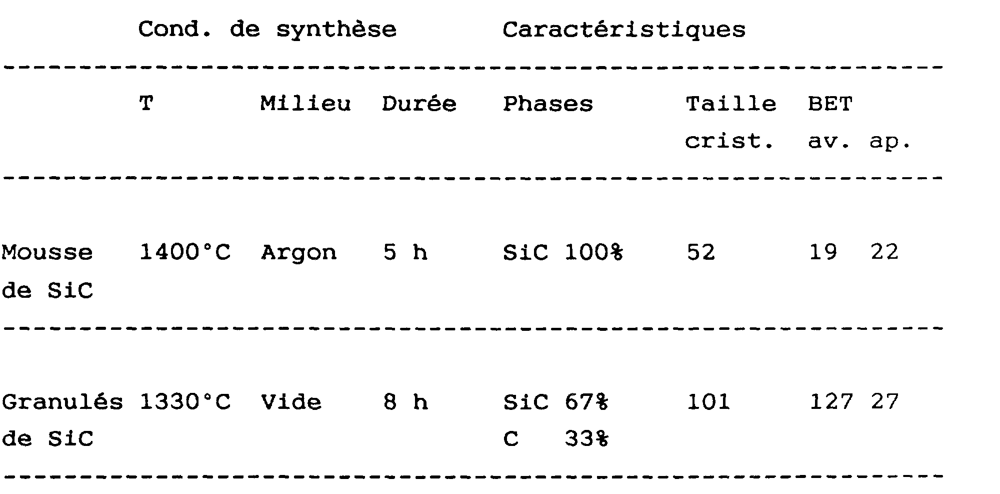

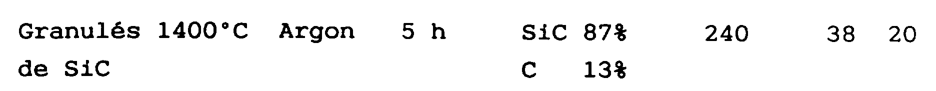

Dans ce tableau, les tailles des cristallites (6ème colonne) sont exprimées en angström = 10⁻¹⁰ m; les 7ème et 8ème colonnes donnent la surface BET, exprimée en m/g, respectivement avant et après le traitement d'oxydation destiné à éliminer le carbone résiduel. La composition des phases (4ème colonne) est donnée évidemment avant ce traitement.

Les conclusions que l'on tire de l'examen de ce tableau sont:
- les surfaces BET qui sont une caractéristique importante pour l'utilisation de ces produits comme catalyseurs ou supports de catalyseurs sont du même ordre pour les trois produits.
- l'utilisation de mousse de carbone permet d'obtenir une taille de cristallites nettement plus fine que les procédés à partir de charbon actif, qu'ils soient sous vide ou sous gaz inerte.
- la substitution d'un balayage d'argon au vide permet de réduire de façon notable les durées de traitement: de 8 à 5 heures.

## Revendications

1. Mousse de carbure de métaux lourds ou de silicium destinée en particulier à servir de catalyseur ou de support de catalyseur et présentant une importante macroporosité ouverte permettant un accès facile aux gaz réactionnels caractérisée en ce que sa macroporosité se présente sous la forme d'un réseau tridimensionnel de sortes de cages interconnectées dont la longueur des arêtes est comprise entre 50 et 500 micromètres, en ce que sa masse volumique est comprise entre 0,03 et 0,1 g/cm³, en ce que sa surface BET est comprise entre 20 et 100 m/g, en ce que la mousse de carbure ne contient pas plus de 0,1 % en poids de métal résiduel et en ce que la taille des cristallites de carbure est comprise entre 40 et 400 angströms.

2. Mousse de carbure de métaux lourds ou de silicium selon la revendication 1 préparée à partir de mousse de carbone activée caractérisée en ce que le diamètre moyen des mésopores de la mousse de carbure est égal à approximativement trois fois le diamètre moyen des mésopores de la mousse de carbone activée et en ce que la microporosité développée par le traitement d'activation a presque complètement disparu.

3. Procédé de préparation de carbures de métaux lourds ou de silicium à haute surface spécifique sous forme de pièce monolithique destinée en particulier à servir de catalyseur ou de support de catalyseur et présentant une importante macroporosité ouverte permettant un accès facile aux gaz réactionnels caractérisé en la combinaison des étapes successives suivantes:
- fabriquer, à partir de mousse de carbone, une pièce ayant les dimensions et la forme du support de catalyseur ou du catalyseur que l'on veut obtenir;
- activer la surface de cette pièce en l'exposant à une oxydation ménagée par le dioxyde de carbone CO2;
- exposer la pièce ainsi activée à l'action d'un composé volatil du métal dont on veut préparer le carbure à une température comprise entre 1000°C et 1400°C, et pendant une durée comprise entre 2 et 6 heures, telles que le composé soit réduit en métal, et que le métal soit carburé.

4. Procédé de préparation de carbures métalliques à haute surface spécifique sous forme de pièce monolithique selon la revendication 3 caractérisé en ce que la mousse de carbone a une masse volumique comprise entre 0,03 à 0,1 g/ cm³.

5. Procédé de préparation de carbures métalliques à haute surface spécifique sous forme de pièce monolithique selon l'une des revendications 3 ou 4 caractérisé en ce que l'activation de la mousse par le dioxyde de carbone se fait à une température comprise entre 800 et 1000°C pendant une durée comprise entre 1 et 4 heures.

6. Procédé de préparation de carbures métalliques à haute surface spécifique sous forme de pièce monolithique selon la revendication 5 caractérisé en ce que l'activation de la mousse par le dioxyde de carbone se fait dans un four à charge fixe.

7. Procédé de préparation de carbures métalliques à haute surface spécifique sous forme de pièce monolithique selon la revendication 5 caractérisé en ce que l'activation de la mousse par le dioxyde de carbone se fait dans un four à passage.

8. Procédé de préparation de carbures de métaux lourds ou de silicium à haute surface spécifique sous forme de pièce monolithique destinée en particulier à servir de catalyseur ou de support de catalyseur et présentant une importante macroporosité ouverte permettant un accès facile aux gaz réactionnels caractérisé en la combinaison des étapes successives suivantes:
- fabriquer, à partir d'un panneau rigide de polyacrylonitrile une pièce ayant les dimensions et la forme du support de catalyseur ou du catalyseur que l'on veut obtenir;
- percer cette pièce de trous rapprochés de faible diamètre pour créer la macroporosité ouverte;
- pyrolyser la pièce, à une température de 700-900°C, pendant 1 à 2 heures sous atmosphère neutre pour obtenir une mousse de carbone;
- exposer la pièce à l'action d'un composé volatil du métal dont on veut préparer le carbure à une température comprise entre 1000°C et 1400°C, et pendant une durée comprise entre 2 et 6 heures,telles que le composé soit réduit en métal, et que le métal soit carburé.

9. Procédé de préparation de carbures métalliques à haute surface spécifique sous forme de pièce monolithique selon l'une des revendications 3 à 7 caractérisé en ce que la mousse de carbone est fabriquée à partir d'une mousse de polyuréthanne préparée selon les étapes successives suivantes:
- lavage de la mousse par une solution chaude de soude pendant quelques minutes;
- rinçage à l'eau courante et séchage;
- imprégnation de la mousse avec une résine et essorage de la mousse imprégnée de façon à ce qu'il reste de 0,03 à 0,1 g de résine /cm3 de mousse;
- pyrolyse de la mousse imprégnée jusque 1200°C.

10. Procédé de préparation de carbures métalliques à haute surface spécifique sous forme de pièce monolithique selon l'une des revendications 3 à 9 caractérisé en ce que la mousse de carbone est soumise, immédiatement avant le traitement de carburation, à un dégazage sous vide primaire ou sous balayage d'un gaz inerte tel l'argon, à des températures comprises entre 1000 et 1200°C pendant des durées de 0,5 à 2 heures.

11. Procédé de préparation de carbures métalliques à haute surface spécifique sous forme de pièce monolithique selon l'une des revendications 3 à 10 caractérisé en ce que le métal appartient au groupe formé par les métaux de transition, (groupes 3b, 4b, 5b, 6b, 7b, 8 des séries 4, 5, 6 de la classification des éléments), les métaux des terres rares et les actinides.

12. Procédé de préparation de carbures métalliques à haute surface spécifique sous forme de pièce monolithique selon la revendication 11 caractérisé en ce que le métal appartient au groupe formé par Mo, W, Re, V, Nb, Ta, Ti, Cr, Ni.

13. Procédé de préparation de carbures métalliques à haute surface spécifique sous forme de pièce monolithique selon l'une des revendications 3 à 12 caractérisé en ce que l'exposition de la pièce activée à l'action d'un composé volatil du métal se fait en l'immergeant dans ou en la posant sur un lit du composé volatil du métal.

14. Procédé de préparation de carbure de silicium à haute surface spécifique sous forme de pièce monolithique destinée en particulier à servir de catalyseur ou de support de catalyseur et présentant une importante macroporosité ouverte permettant un accès facile aux gaz réactionnels caractérisé en la combinaison des étapes suivantes:
- fabriquer une pièce en mousse de carbone ayant les dimensions et la forme du support de catalyseur ou du catalyseur que l'on veut obtenir;
- activer la surface de cette pièce en l'exposant à une oxydation ménagée par le dioxyde de carbone CO2;
- exposer la pièce ainsi activée à l'action du sous-oxyde de silicium SiO à une température et pendant une durée telles que le sous-oxyde soit complètement transformé en carbure de silicium.

15. Procédé de préparation de carbure de silicium à haute surface spécifique sous forme de pièce monolithique selon la revendication 14 caractérisé en ce que l'exposition de la pièce de mousse de carbone activée à l'action de SiO se fait en l'immergeant dans ou en la posant sur un lit composé d'un mélange de silice et de silicium.

16. Procédé de préparation de carbures métalliques ou de carbure de silicium à haute surface spécifique sous forme de pièce monolithique selon l'une des revendications 13 ou 15 caractérisé en ce que l'exposition de la pièce de mousse de carbone activée à l'action du composé métallique ou de SiO se fait dans un four à charge fixe.

17. Procédé de préparation de carbures métalliques ou de carbure de silicium à haute surface spécifique sous forme de pièce monolithique selon l'une des revendications 13 ou 15 caractérisé en ce que l'exposition de la pièce de mousse de carbone activée à l'action du composé métallique ou de SiO se fait dans un four à passage.

18. Procédé de préparation de carbures métalliques ou de carbure de silicium à haute surface spécifique sous forme de pièce monolithique selon l'une des revendications 3 à 17 caractérisé en ce que l'exposition de la pièce de mousse de carbone activée à l'action du composé métallique ou de SiO se fait sous balayage de gaz inerte et en ce que l'on maintient la pression partielle de CO inférieure à 2 hPa par augmentation du débit de gaz inerte.

## Patentansprüche

1. Schaum aus Karbid von Schwermetallen oder Silizium, der insbesondere zum Dienen als Katalysator oder Katalysatorträger bestimmt ist und eine erhebliche offene Makroporosität aufweist, wodurch ein leichter Zustrom für die Reaktionsgase ermöglicht wird,
dadurch gekennzeichnet,
daß seine Makroporosität die Form eines dreidimensionalen Netzes von Arten von untereinander verbundenen Käfigen aufweist, deren Länge der Kanten im Bereich von 50 bis 500 µm liegt, daß seine Volumenmasse im Bereich von 0,03 bis 0,1 g/cm³ liegt, daß seine BET-Oberfläche im Bereich von 20 bis 100 m/g liegt, daß der Karbidschaum nicht mehr als 0,1 Gew.-% Restmetall enthält und daß die Abmessung der Karbidkristallite im Bereich von 40 bis 400 Å liegt.

2. Schwermetall- oder Siliziumkarbidschaum nach dem Anspruch 1, der ausgehend von aktiviertem Kohlenstoffschaum hergestellt ist,
dadurch gekennzeichnet,
daß der mittlere Durchmesser der Mesoporen des Karbidschaumes gleich angenähert dem Dreifachen des mittleren Durchmessers der Mesoporen des aktivierten Kohlenstoffschaumes ist und daß die durch die Aktivierungsbehandlung entwickelte Mikroporosität fast völlig verschwunden ist.

3. Verfahren zur Herstellung von Karbiden von Schwermetallen oder Silizium mit hoher spezifischer Oberfläche in Form eines monolithischen Bauteils, das insbesondere zum Dienen als Katalysator oder Katalysatorträger bestimmt ist und eine erhebliche offene Makroporisität aufweist, wodurch ein leichter Zustrom für die Reaktionsgase ermöglicht wird, gekennzeichnet durch die folgenden aufeinanderfolgenden Schritte:
- Herstellung eines Bauteils mit den Abmessungen und der Form des Katalysatorträgers oder Katalysators, den man erhalten will, aus Kohlenstoffschaum;
- Aktivierung der Oberfläche dieses Bauteils, indem es einer gemäßigten Oxidation durch Kohlendioxid CO₂ ausgesetzt wird;
- Aussetzen des so aktivierten Bauteils der Wirkung einer flüchtigen Verbindung des Metalls, aus dem man das Karbid herstellen will, bei einer Temperatur im Bereich von 1000 bis 1400 °C und während einer Dauer im Bereich von 2 bis 6 Stunden derart, daß die Verbindung zum Metall reduziert und daß das Metall karburiert wird.

4. Verfahren zur Herstellung von Metallkarbiden mit hoher spezifischer Oberfläche in Form eines monolithischen Bauteils nach dem Anspruch 3,
dadurch gekennzeichnet,
daß der Kohlenstoffschaum eine Volumenmasse im Bereich von 0,03 bis 1 g/cm³ hat.

5. Verfahren zur Herstellung von Metallkarbiden mit hoher spezifischer Oberfläche in Form eines monolithischen Bauteils nach einem der Ansprüche 3 oder 4,
dadurch gekennzeichnet,
daß die Aktivierung des Schaumes durch das Kohlendioxid bei einer Temperatur im Bereich von 800 bis 1000 °C während einer Dauer im Bereich von 1 bis 4 Stunden erfolgt.

6. Verfahren zur Herstellung von Metallkarbiden mit hoher spezifischer Oberfläche in Form eines monolithischen Bauteils nach dem Anspruch 5,
dadurch gekennzeichnet,
daß die Aktivierung des Schaumes durch das Kohlendioxid in einem Ofen mit fester Charge erfolgt.

7. Verfahren zur Herstellung von Metallkarbiden mit hoher spezifischer Oberfläche in Form eines monolithischen Bauteils nach dem Anspruch 5,
dadurch gekennzeichnet,
daß die Aktivierung des Schaumes durch das Kohlendioxid in einem Durchlaufofen erfolgt.

8. Verfahren zur Herstellung von Karbiden von Schwermetallen oder Silizium mit hoher spezifischer Oberfläche in Form eines monolithischen Bauteils, das insbesondere zum Dienen als Katalysator oder Katalysatorträger bestimmt ist und eine erhebliche offene Makroporisität aufweist, wodurch ein leichter Zustrom für die Reaktionsgase ermöglicht wird, gekennzeichnet durch die folgenden aufeinanderfolgenden Schritte:
- Herstellung eines Bauteils mit den Abmessungen und der Form des Katalysatorträgers oder Katalysators, den man erhalten will, aus einer steifen Polyacrylnitrilplatte;
- Durchbohren dieses Bauteils mit einander nahen Löchern geringen Durchmessers zum Schaffen der offenen Makroporosität;
- Pyrolysierung des Bauteils bei einer Temperatur von 700 bis 900 °C während 1 bis 2 Stunden unter neutraler Atmosphäre zum Erhalten eines Kohlenstoffschaumes;
- Aussetzen des Bauteils der Wirkung einer flüchtigen Verbindung des Metalls, aus dem man das Karbid herstellen will, bei einer Temperatur im Bereich von 1000 bis 1400 °C und während einer Dauer im Bereich von 2 bis 6 Stunden derart, daß die Verbindung zum Metall reduziert und daß das Metall karburiert wird.

9. Verfahren zur Herstellung von Metallkarbiden mit hoher spezifischer Oberfläche in Form eines monolithischen Bauteils nach einem der Ansprüche 3 bis 7,
dadurch gekennzeichnet,
daß der Kohlenstoffschaum aus einem Polyurethanschaum hergestellt wird, der gemäß den folgenden aufeinanderfolgenden Schritten erzeugt wurde:
- Waschen des Schaumes mit einer heißen Natriumhydroxidlösung während einiger Minuten;
- Spülen mit fließendem Wasser und Trocknen;
- Imprägnierung des Schaumes mit einem Harz und Absaugung des imprägnierten Schaumes derart, daß 0,03 bis 0,1 g Harz/cm³ Schaum verbleibt;
- Pyrolyse des imprägnierten Schaumes bis 1200 °C.

10. Verfahren zur Herstellung von Metallkarbiden mit hoher spezifischer Oberfläche in Form eines monolithischen Bauteils nach einem der Ansprüche 3 bis 9,
dadurch gekennzeichnet,
daß der Kohlenstoffschaum unmittelbar vor der Karburierungsbehandlung einer Entgasung unter primärem Vakuum oder unter Spülung mit einem inerten Gas wie Argon bei Temperaturen im Bereich von 1000 bis 1200 °C während Dauern von 0,5 bis 2 Stunden ausgesetzt wird.

11. Verfahren zur Herstellung von Metallkarbiden mit hoher spezifischer Oberfläche in Form eines monolithischen Bauteils nach einem der Ansprüche 3 bis 10,
dadurch gekennzeichnet,
daß das Metall zu der aus den Übergangsmetallen (Gruppen 3b, 4b, 5b, 6b, 7b, 8 der Serien 4, 5, 6 des Periodischen Systemes der Elemente, den Metallen der Seltenen Erden und den Actiniden gebildeten Gruppe gehört.

12. Verfahren zur Herstellung von Metallkarbiden mit hoher spezifischer Oberfläche in Form eines monolithischen Bauteils nach dem Anspruch 11,
dadurch gekennzeichnet,
daß das Metall zu der aus Mo, W, Re, V, Nb, Ta, Ti, Cr, Ni gebildeten Gruppe gehört.

13. Verfahren zur Herstellung von Metallkarbiden mit hoher spezifischer Oberfläche in Form eines monolithischen Bauteils nach einem der Ansprüche 3 bis 12,
dadurch gekennzeichnet,
daß das Aussetzen des aktivierten Bauteils der Wirkung einer flüchtigen Verbindung des Metalls durch dessen Eintauchen in oder dessen Legen auf ein Bett der flüchtigen Verbindung des Metalls erfolgt.

14. Verfahren zur Herstellung von Siliziumkarbid mit hoher spezifischer Oberfläche in Form eines monolithischen Bauteils, das insbesondere zum Dienen als Katalysator oder Katalysatorträger bestimmt ist und eine erhebliche offene Makroporosität aufweist, wodurch ein leichter Zustrom für die Reaktionsgase ermöglicht wird, gekennzeichnet durch die Kombination der folgenden Schritte:
- Herstellung eines Bauteils aus Kohlenstoffschaum mit den Abmessungen und der Form des Katalysatorträgers oder des Katalysators, den man erhalten will;
- Aktivierung der Oberfläche dieses Bauteils, indem es einer gemäßigten Oxidation durch Kohlendioxid CO₂ ausgesetzt wird;
- Aussetzen des so aktivierten Bauteils der Wirkung des Siliziummonoxids SiO bei einer Temperatur und während einer Dauer derart, daß das Monoxid vollständig in Silizium umgewandelt wird.

15. Verfahren zur Herstellung von Siliziumkarbid mit hoher spezifischer Oberfläche in Form eines monolithischen Bauteils nach dem Anspruch 14,
dadurch gekennzeichnet,
daß das Aussetzen des Bauteils aus aktiviertem Kohlenstoffschaum der Wirkung von SiO durch dessen Eintauchen in oder dessen Legen auf ein aus einem Gemisch von Siliziumdioxid und Silizium zusammengesetztes Bett erfolgt.

16. Verfahren zur Herstellung von Metallkarbiden oder Siliziumkarbid mit hoher spezifischer Oberfläche in Form eines monolithischen Bauteils nach einem der Ansprüche 13 oder 15,
dadurch gekennzeichnet,
daß das Aussetzen des Bauteils aus aktiviertem Kohlenstoffschaum der Wirkung der Metallverbindung oder von SiO in einem Ofen mit fester Charge erfolgt.

17. Verfahren zur Herstellung von Metallkarbiden oder Siliziumkarbid mit hoher spezifischer Oberfläche in Form eines monolithischen Bauteils nach einem der Ansprüche 13 oder 15,
dadurch gekennzeichnet,
daß das Aussetzen des Bauteils aus aktiviertem Kohlenstoffschaum der Wirkung der Metallverbindung oder von SiO in einem Durchlaufofen erfolgt.

18. Verfahren zur Herstellung von Metallkarbiden oder Siliziumkarbid mit hoher spezifischer Oberfläche in Form eines monolithischen Bauteils nach einem der Ansprüche 3 bis 17,
dadurch gekennzeichnet,
daß das Aussetzen des Bauteils aus aktiviertem Kohlenstoffschaum der Wirkung der Metallverbindung oder von SiO unter Spülung mit einem inerten Gas erfolgt und daß man den Partialdruck von CO durch Erhöhung des Durchsatzes von Inertgas unter 2 hPa hält.

## Claims

1. Carbide foam of heavy metals or silicon to be used in particular as a catalyst or catalyst support and having a large open macroporosity giving easy access to the reaction gases, characterized in that its macroporosity is in the form of a three-dimensional network of interconnected cages, whereof the edge length is between 50 and 500 micrometres, in that its density is between 0.03 and 0.1 g/cm³, in that its BET surface is between 20 and 100 m/g, in that the carbide foam contains no more than 0.1% by weight residual metal and in that the size of the carbide crystallites is between 40 and 400 Angströms.

2. Carbide foam of heavy metals or silicon according to claim 1 prepared from activated carbon foam, characterized in that the average diameter of the mesopores of the carbide foam is equal to approximately three times the average diameter of the mesopores of the activated carbon foam and in that the microporosity developed by the activation treatment has almost completely disappeared.

3. Process for the preparation carbides of heavy metals or silicon having a large specific surface in the form of a monolithic part and intended in particular to be used as a catalyst or catalyst support and having a large open macroporosity giving easy access to the reaction gases, characterized by the combination of the following successive stages:
producing, from carbon foam, a part having the dimensions and shape of the catalyst or catalyst support which it is wished to obtain;
activating the surface of said part by exposing it to controlled oxidation by carbon dioxide CO₂;
exposing the thus activated part to the action of a volatile compound of the metal, whose carbide it is wished to prepare at a temperature between 1000 and 1400°C and for between 2 and 6 hours, so that the metal content of the compound is reduced and the metal is carburized.

4. Process for the preparation of metal carbides having a large specific surface in the form of a monolithic part according to claim 3, characterized in that the carbon foam has a density between 0.03 and 0.1 g/cm³.

5. Process for the preparation of metal carbides having a large specific surface in the form of a monolithic part according to one of the claims 3 or 4, characterized in that the activation of the foam by carbon dioxide takes place at a temperature between 800 and 1000°C for between 1 and 4 hours.

6. Process for the preparation of metal carbides with a large specific surface in the form of a monolithic part according to claim 5, characterized in that the activation of the foam by carbon dioxide takes place in a fixed charge furnace.

7. Process for the preparation of metal carbides with a large specific surface in the form of a monolithic part according to claim 5, characterized in that the activation of the foam by the carbon dioxide takes place in a passage furnace.

8. Process for the preparation of carbides of heavy metals or silicon with a large specific surface in the form of a monolithic part to be used in particular as a catalyst or catalyst support and having a large open macroporosity permitting easy access to the reaction gases, characterized by the combination of the following successive stages:
producing, from a rigid polyacrylonitrile panel, a part having the dimensions and shape of the catalyst or catalyst support which it is wished to obtain;
making small diameter, closely juxtaposed holes in said part in order to create the open macroporosity;
pyrolyzing the part at a temperature of 700 to 900°C, for 1 to 2 hours and under a neutral atmosphere;
exposing the part to the action of a volatile compound of the metal, whose carbide it is wished to produce at a temperature between 1000 and 1400°C and for a time between 2 and 6 hours, so that the metal content of the compound is reduced and the metal is carburized.

9. Process for the preparation of metal carbides with a large specific surface in the form of a monolithic part according to one of the claims 3 to 7, characterized in that the carbon foam is produced from a polyurethane foam produced in accordance with the following successive stages:
washing the foam with a hot soda solution for a few minutes;
rinsing with running water and drying;
impregnation of the foam with a resin and draining the impregnated foam so that 0.03 to 0.1g of resin/cm³ foam is left behind;
pyrolysis of the impregnated foam up to 1200°C.

10. Process for the preparation of metal carbides with a large specific surface in the form of a monolithic part according to one of the claims 3 to 9, characterized in that the carbon foam, immediately prior to the carburization treatment, undergoes degassing under an initial vacuum or scavenging by an inert gas such as argon, at between 1000 and 1200°C and for between 0.5 and 2 hours.

11. Process for the preparation of metal carbides having a large specific surface in the form of a monolithic part according to one of the claims 3 to 10, characterized in that the metal belongs to the group formed by transition metals (groups 3b,4b,5b,6b,7b,8 of series 4,5,6 of the classification of elements), rare earth metals and actinides.

12. Process for the preparation of metal carbides with a large specific surface in the form of a monolithic part according to claim 11, characterized in that the metal belongs to the group formed by Mo, W, Re, V, Nb, Ta, Ti, Cr, Ni.

13. Process for the preparation of metal carbides with a large specific surface in the form of a monolithic part according to one of the claims 3 to 12, characterized in that the exposure of the activated part to the action of a volatile compound of the metal takes place by immersing it in or by placing it on a hed of the volatile compound of the metal.

14. Process for the preparation of silicon carbide having a large specific surface in the form of a monolithic part and intended more particularly for use as a catalyst or catalyst support and having a large open macroporosity permitting easy access to the reaction gases, characterized by the combination of the following stages:
producing a carbon foam part having the dimensions and shape of the catalyst support or catalyst which it is wished to obtain;
activating the surface of said part by exposing it to a planned oxidation by carbon dioxide CO₂;
exposing the thus activated part to the action of silicon suboxide SiO at a temperature and for a time such that the suboxide is completely transformed into silicon carbide.

15. Process for the preparation of silicon carbide having a large specific surface in the form of a monolithic part according to claim 14, characterized in that the exposure of the activated carbon foam part to SiO action takes place by immersing it in or placing it on a bed formed from a mixture of silica and silicon.

16. Process for the preparation of metal carbides or silicon carbide with a large specific surface in the form of a monolithic part according to one of the claims 13 or 15, characterized in that the exposure of the activated carbon foam part to the action of the metal compound or SiO takes place in a fixed charge furnace.

17. Process for the preparation of metal carbides or silicon carbide with a large specific surface in the form of a monolithic part according to one of the claims 13 or 15, characterized in that the exposure of the activated carbon foam part to the action of the metal compound or SiO takes place in a passage furnace.

18. Process for the preparation of metal carbides or silicon carbide with a large specific surface in the form of a monolithic part according to one of the claims 3 to 17, characterized in that the exposure of the activated carbon foam part to the action of the metal compound or SiO takes place under inert gas scavenging and in that the partial CO pressure is kept below 2 hPa by increasing the inert gas flow rate.
